(19) **Europäisches Patentamt / European Patent Office / Office européen des brevets**

(11) **EP 2 615 769 B1**

(12) **EUROPEAN PATENT SPECIFICATION**

(45) Date of publication and mention
of the grant of the patent:
**18.04.2018 Bulletin 2018/16**

(51) Int Cl.:
***H04L 7/00*** (2006.01)

(21) Application number: **11009862.1**

(22) Date of filing: **15.12.2011**

(54) **Clock recovery through digital techniques in a coherent receiver**

Taktwiederherstellung durch Digitaltechniken in einem kohärenten Empfänger

Récupération d'horloge via des techniques numériques dans un récepteur cohérent

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.07.2013 Bulletin 2013/29**

(73) Proprietor: **Cisco Technology, Inc.**
**San Jose, CA 95134 (US)**

(72) Inventor: **Fludger, Christopher**
**90482 Nürnberg (DE)**

(74) Representative: **Roberts, Gwilym Vaughan et al**
**Kilburn & Strode LLP**
**Lacon London**
**84 Theobalds Road**
**London WC1X 8NL (GB)**

(56) References cited:
**EP-A2- 0 924 892       WO-A1-96/28918**
**US-A1- 2008 056 403**

EP 2 615 769 B1

**Description**

TECHNICAL FIELD

The present disclosure relates to a receiver for a communications system. The receiver uses coherent polarization with multiplexed quadrature phase shift keying.

BACKGROUND

Coherent detection is a technique applied in optical or electrical communication receivers. For example, in optical communications systems, optical receivers use intradyne detection so that the local oscillator does not have to be perfectly aligned in frequency and phase to the incoming signal.

US2008/0056403A1 refers to communication techniques where it is desired to align receiver samples to a transmitted signal in the absence of a common clock. Here, a timing recovery method is proposed using a digital interpolator to re-synchronize incoming samples, wherein the re-synchronization is controlled using a timing phase detector, a loop filter and a numerically controlled oscillator, in a single control loop.

EP0924892A2 suggests a circuit and a method for reproducing bit timing, wherein a subtracter makes a subtraction between a digitalized input signal and the same signal delayed by a symbol interval. The calculated difference is used to detect a timing gap between a sampling clock and an optimal sampling point, based on a respective phase difference. The result is used to control digital interpolation filters.

When receiving high data rate signals, clock recovery is more complex because the received signal is highly distorted and the data rate is typically higher than a processing rate of the receiver. When the receive data rate is anticipated to be higher than the processing rate of the receiver, a highly parallel receiver implementation has been used, but such an implementation can incur delays in its feedback paths. It is very difficult to achieve acceptable jitter tolerance levels using the current receiver designs. Jitter is the undesired deviation from true periodicity of an assumed periodic signal in electronics and telecommunications, often in relation to a reference clock source.

BRIEF DESCRIPTION OF THE DRAWINGS

FIG. 1 is a block diagram showing an example of a receiver apparatus using digital techniques for clock recovery.
FIG. 2 is a block diagram showing an example of a signal processing architecture incorporating digital techniques for clock recovery and useful in the receiver apparatus shown in FIG. 1.

FIG. 3 is a block diagram of a digital resampler useful in the signal processing architecture shown in FIG 2.
FIG. 4 shows a more detailed block diagram of the signal processing architecture depicted in FIG. 2, and illustrating line clock operation when the local received clock has been recovered.
FIG. 5 shows a flow chart depicting the clock recovery operations using digital techniques.
FIG. 6 shows simulation results of a receiver apparatus configured with the digital clock recovery capabilities described herein and illustrating jitter mark performance as defined by the OTU-4a (28G).

DESCRIPTION OF EXAMPLE EMBODIMENTS

Overview

In a coherent detection receiver, clock recovery is achieved using digital techniques without an analog phase lock loop and other analog signal processing techniques to control the analog-to-digital sampling. A free-running clock is used to clock an analog-to-digital converter in the receiver to digitize an input analog signal derived from a received signal to produce digital data. The digital data is resampled using a numerically controlled oscillator clock. Phase detection is performed on the digital data after it is resampled to determine any phase offset. The numerically controlled oscillator clock is adjusted based on the phase offset. In addition, the digital data is delayed after the digital resampling operation using a digital delay element. The phase offset is also fed forward to the digital delay element.

Example Embodiments

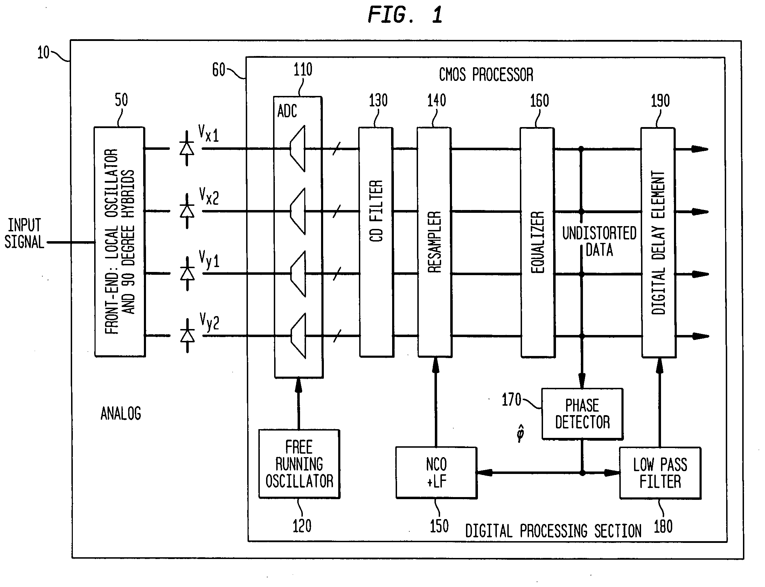

Referring first to FIG. 1, a receiver apparatus or system 10 is shown comprising an analog front end section 50 and a digital processing section 60. The analog front end section 50 includes a local oscillator laser and 90 degrees hybrids that operate to combine the received input signal with a local oscillator signal to generate four output signals $V_{x1}$, $V_{x2}$, $V_{y1}$ and $V_{y2}$. A local oscillator laser is used for mixing the received signal down to baseband. The digital processing section 60 includes an analog-to-digital converter (ADC) 110, a free running oscillator (FRO) 120 that generates a FRO clock signal, an optional chromatic dispersion (CD) filter circuit 130, a digital resampler 140, a numerically controlled oscillator (NCO) and integrated loop filter (LF) 150, an equalizer 160 and a timing phase detector 170. The ADC 110 is driven by the FRO clock signal output by the FRO 120. The frequency of the free running oscillator clock can be higher or lower than twice the baud rate, i.e., by at least 2 samples/bit. When it is higher than the baud rate, the ADC 110 is oversampling and when it is lower than the baud rate, the ADC 110 is undersampling. The techniques described in this invention are useful when the ADC 110 is undersampling or oversampling. When the ADC is undersampling, there is an additional advantage of lower power dissipation in the optional chromatic dispersion filter. Hence it is advantageous to use the optional chromatic dispersion filter 130 when the ADC is undersampling. The optional chromatic dispersion filter 130 uses the undersampled digital data from the ADC 110. By using undersampled data for the chromatic dispersion filter 130, the receiver apparatus has the additional advantage of reduced processing power because it is processing fewer samples than those required by its baud rate.

The digital processing section 60 also includes a low pass filter 180 and a digital delay element 190. The digital delay element 190 receives as input the outputs of the equalizer 160 and is controlled by an output of the low pass filter 180. The low pass filter 180 is coupled to receive the output of the phase detector 170 and to filter the phase detector output for supply to the digital delay element 190.

The four output signals $V_{x1}$, $V_{x2}$, $V_{y1}$ and $V_{y2}$ are supplied to the ADC 110 which converts them to digital data. The outputs from the ADC 110 are coupled to the optional CD filter circuit 130. The output of the ADC 110 is in the digital clock domain and the chromatic dispersion filtering is performed on the digital data in the digital clock domain. The output from the optional CD filter 130 is supplied as input to the digital resampler 140. The resampler 140 is driven by the NCO and integral loop filter 150. The output from the resampler 140 is coupled to the input of equalizer 160. The output from the equalizer 160 is coupled to the phase detector 170. The equalizer 160 is configured to reduce intersymbol interference. The resampler output is in the digital clock domain and is fed to the equalizer 160. Thus, the equalization is performed on digital data in the digital clock domain. The resampler 140 operates to convert data that was not perfectly retimed (with respect to a desired or optimum sampling frequency) to data that is perfect retimed with respect to the optimum sampling frequency. The output of the phase detector 170 is supplied on a feedback path to the NCO and integral loop filter 150 and on a feed forward path, via low pass filter 180, to the digital delay element 190.

The NCO and integral loop filter 150 is controlled by the feedback from the phase detector 170. The NCO and integral loop filter 150 includes a counter whose counting step is adjusted based on an applied digital input taken from the output of the phase detector 170.

The ADCs and other components of the processing system may be implemented by a single device, or by different devices as appropriate. The same or different type of device may be appropriate for each function.

The noise performance of the sampling operations performed by the ADC 110 is dependent upon the quality of the oscillator that supplies the clock signal to the ADC 110. These oscillators tend not to have a wide frequency range. By driving the ADC 110 with a clock output by the free running oscillator 120, the receiver 10 is not dependent on the limited narrow frequency range supported by typical ADCs. Thus, the receiver apparatus 10 can accommodate a wide range of baud rates with the use of a digital resampler 140.

In summary, the receiver apparatus or system 10 shown in FIG. 1 comprises an ADC configured to receive an input analog signal from a received (optical or electrical) signal and to convert the input analog signal to produce digital data. A free running oscillator is configured to generate a free running clock to clock the ADC. A digital resampler is configured to digitally resample the digital data. An NCO is configured to output an NCO clock that is supplied to the digital resampler. A phase detector is configured to detect any phase offset in the digital data after it is digitally resampled. The output of the phase detector is supplied to a control input of the NCO. A digital delay element delays the digital data after it is resampled, and is controlled by the output of the phase detector.

The phase detector is used to detect phase offset in the digital data with respect to an optimum sampling point (in time) of the digital data. The phase offset is used in a feedback path and a feed forward path. Firstly, the phase offset is fed back to the digital resampler via a loop-filter and the NCO to adjust a reference clock to the digital resampler. This feedback path has latency and therefore is useful to reduce relatively low frequency jitter, e.g., approximately 10 to 100 kHz. Because the feedback path is slow, it is stable. Note that the jitter requirement increases for lower frequencies and the feedback path provides acceptable tolerance for relatively low frequencies. This alone will not fulfill the jitter requirements and hence there is a second path.

The second path is forward to the digital delay element via a low pass filter. Typically, the low pass filter has a bandwidth from 5 to 10 MHz. This low pass filter will remove any high frequency jitter. The digital delay element is very fast but quite limited in its delay range. Typically, the delay range would be plus or minus 8 unit intervals and would not work well for low frequency jitter. Thus, the feed forward path of phase offset information to the digital delay element serves to reduce relatively high frequency jitter.

Both the paths together fulfill the jitter requirements. The resampler with the slow feedback path can perform interpolation over a very wide frequency range and track much slower but larger jitter. The feed forward digital delay path with the low pass filter works well with the high frequency jitter. Both together provide tolerance in high and low frequency ranges.

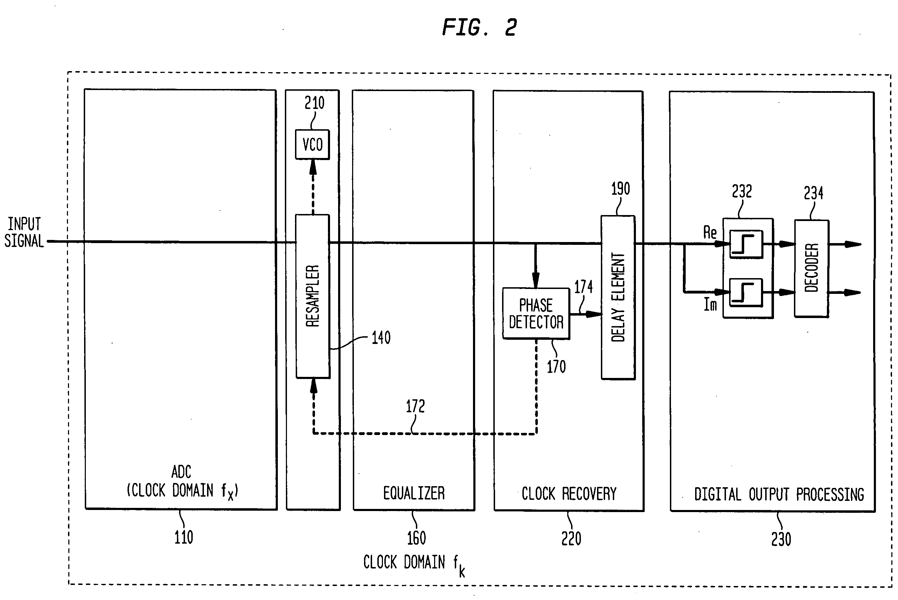

Reference is now made to FIG. 2 that illustrates an example of an overall signal processing architecture 20 that performs clock recovery using digital techniques. The input signal travels through the ADC 110 operating in a first digital clock domain $f_x$ where the input signal is sampled (undersampled or oversampled). The output of the resampler 140 drives a voltage controlled oscillator (VCO) 210 that is used by the digital signal processing blocks after the resampler 140. The output from the resampler 140 is in a second digital clock domain $f_k$, which is 2 samples/bit. The digital signal processing blocks after the resampler 140 work at a clock rate of $f_k$/BUSWIDTH. For example, if we process 192 samples per processing cycle, the digital logic after the resampler will run at $f_k$/192. The voltage controlled oscillator (VCO) 210 drives the digital signal processing blocks after the resampler. The output from the resampler 140 is supplied to the equalizer 160. The output from the equalizer 160 is supplied to a clock recovery block 220. The phase detector 170 is in the clock recovery block 220. The phase detector 170 detects the phase offset with respect to an optimum sample point of the digital data. Thus the received input signal passes through the resampler and is then passed on to the digital output processing block to decode the data contained in the received input signal. FIG. 2 also shows the feedback path shown at reference numeral 172 coupled to the resampler 140 from the phase detector 170 and the feed forward path 174 to the digital delay element 190. The output from the clock recovery block 220 is coupled to the digital output processing block 230 that includes a slicer or thresholder 232 and a decoder 234, as well as other blocks not shown for simplicity, such as a carrier recovery block. The slicer 232 outputs either a "1" or a "0" for real (Re) and imaginary (Im) components of the digital data to the decoder 234. The decoder 234 can decode and recover the transmitted information from the digital data. The signal processing architecture described above operates in parallel. The system processes N samples in parallel per clock cycle.

As noted in FIG. 2, there are two digital clock domains: clock domain $f_x$ for the sampled data and clock domain $f_k$ for the resampled data. The ADC 110 can be clocked to undersample or oversample the digital data. The undersampling ratio can be as low as 1.5 samples/baud without significant performance penalty.

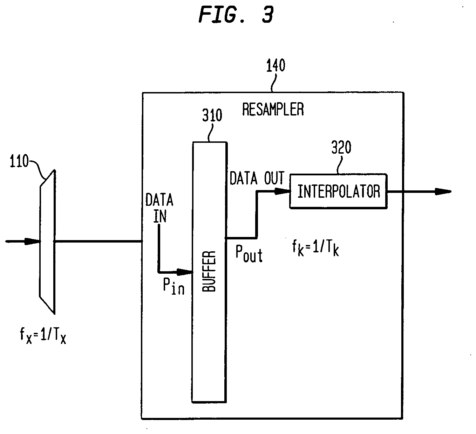

Reference is now made to FIG. 3 that shows a block diagram of the resampler 140. The resampler 140 operates digitally and includes a buffer 310 and a digital interpolator 320. The resampler 140 receives input from the output of the ADC 110 that samples the input analog signal at frequency $f_x$. The digital data from the ADC 110 is written to the buffer 310 at rate $f_x$ and then read out from the buffer 300. Multiple data inputs are buffered before the data is read out to the interpolator 320. The data is extracted from the buffer 310 by the interpolator 320 at rate $f_k$. Input and output pointers $P_{in}$ and $P_{out}$, respectively, for the buffer 310 are incremented at respective rates. The output lags behind the input. When the output pointer $P_{out}$ is a non-integer, interpolation is used. Note that in general when the system is running, the output pointer is a non-integer and interpolation is always used. Data is regularly placed into the buffer 310 at integer pointer $P_{in}(t) = t/T_x$ where t is time and $T_x$ is the ADC sample period Data is regularly extracted from the buffer at non-integer point $P_{out}(t) = t/T_k - L$ where t is time, $T_k$ is half the symbol period for 2 samples/bit resampling and L is the lag in the buffer 310 to prevent overrun. At any output index k, the output index is reading from output pointer $P_{out} = \gamma_k$ and the input index is writing asynchronously to pointer $P_{in} = x = \lfloor \gamma_k \rfloor + L$ where $\gamma_k = T_k/T_x$.

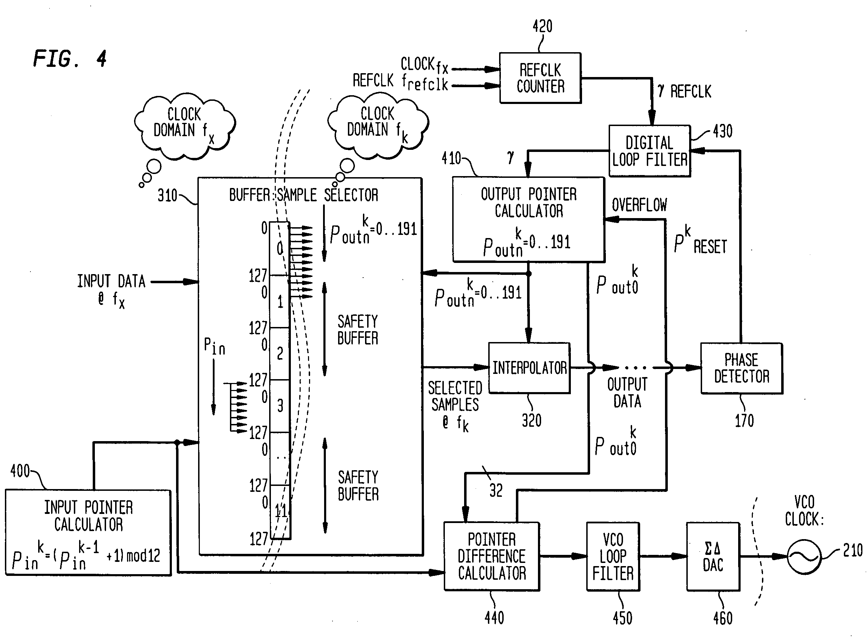

Reference is now made to FIG. 4 that shows a more detailed block diagram of the parallel signal processing architecture for the digital resample 140. An input pointer calculator 400 is a digital logic block that performs the calculation $p_{in}^k = (p_{in}^{k-1}+1) \mod 12$ to calculate the input pointer position. Data is written at that position in the buffer 310. An output pointer calculator 410 (also a digital logic block) is provided that calculates the output pointer position $p_{out\,n=0..191}^k$ that is used to select samples (according to a sampling ratio) to be read out from the buffer to the interpolator 320.

Thus, the digital resampler 140 includes logic that is configured to select samples of the digital data based on a sampling ratio for interpolation by the digital interpolator 320.

There are two modes of operation. The first is an acquisition mode in which the receiver apparatus is trying to acquire the clock and data from the input samples. The second mode of operation is the tracking mode. In the tracking mode, acquisition has been achieved and the receiver apparatus is locked to the incoming data stream. In acquisition mode, an external reference clock $f_{refclk}$ is used so that the clock recovery circuit is close to where the clock from the received signal typically lies. In acquisition mode, a reference clock (REFCLK) counter 420 determines the sampling ratio directly and feeds this through the digital loop filter 430 to the output pointer calculator 410. The signal from the phase detector 170 is not used in the acquisition mode. The output pointer calculator 410 is either driven by REFCLK counter 420 in acquisition mode that takes a combination of inputs from the reference clock and clock $f_k$ or from the phase detector in the tracking mode. The phase information from either the REFCLK counter 420 or phase detector 170 passes via the digital loop filter 430 to the output pointer calculator 410.

The interpolator 320 performs interpolation between the selected samples. Any phase deviation/offset in the subsequent output samples is measured in the phase detector 170 and is fed back to the resampler 140 and additionally fed forward to the digital delay element as described above. Thus, the output of the phase detector 170 is filtered by the digital loop filter to generate the resampling ratio, and the counter in the NCO is adjusted based on the resampling ratio.

While the preceding processing blocks ensure that the digital output samples are correctly retimed, the digital signal processing blocks require a clock signal. This should have the nominal frequency $f_x$, or a divided down multiple of this, e.g., $f_x$/192 when 192 samples are processed in parallel. Since the jitter is removed digitally, this clock requires only the average frequency $f_x$ and is

not required to follow the fast jitter on the input data signal. The output from output pointer calculator 410 is also coupled to a pointer difference calculator 440. The pointer difference calculator 440 is a digital logic block that computes a difference between the input pointer and the output pointer. The output of the pointer difference calculator 440 is coupled to a voltage controlled oscillator (VCO) loop filter 450 and then supplied to sigma-delta digital-to-analog converter (DAC) 460 to drive the VCO 210. The control loop of this architecture regulates the frequency at which data is removed from the buffer 310 so that the distance between input and output pointers is kept approximately constant.

In the acquisition mode or when the data is not locked, the VCO 210 is indirectly driven by the reference clock using the REFCLK counter 420. The REFCLK clock counter 420 determines the resampling rate used for digitally resampling the digital data by comparing the reference clock to the clock used to drive the ADC 110.

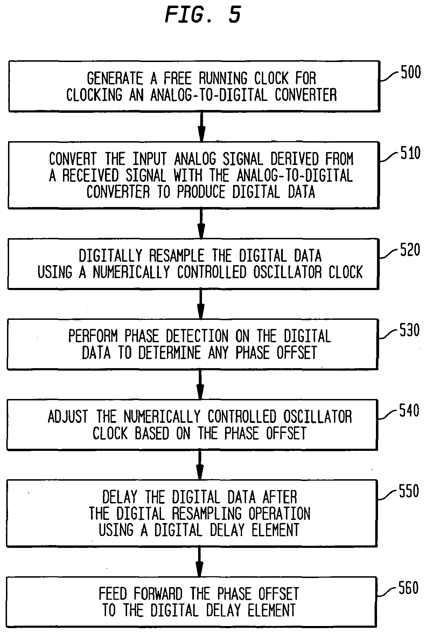

Reference is now made to FIG. 5 that shows a flow chart depicting the operations of the digital clock recovery techniques described herein. At 500, a free running clock is generated for clocking an ADC. At 510, an input analog signal (derived from a received signal) is converted with the ADC to produce digital data. At 520, the digital data is resampled using a numerically controlled oscillator clock signal. At 530, phase detection is performed on the digital data to determine any phase offset (with respect to an optimum sampling point of the digital data). At 540, the numerically controlled oscillator clock signal is adjusted based on the phase offset. At 550, the digital data is delayed with a digital delay element after the resampling operation. At 560, the phase offset is fed forward to the digital delay element.

There are four digital clock signals used by the receiver apparatus that are relevant: (1) reference clock $f_{refclk}$ that drives the REFCLK counter 420, (2) free running oscillator clock signal output by the FRO 120, (3) baud rate clock $f_k$ for the received input signal, and (4) clock signal of external VCO 210. The reference clock is an externally clock signal that approximates the frequency of the received input signal. The input data signal may have typically +/- 100 ppm frequency offset and it also contains jitter. The reference clock is therefore only appropriate for initialization when the system is in acquisition mode and not for operation in tracking mode.

The FRO clock signal controls the converting by ADC 110. When the ADC is controlled to perform undersampling, the FRO clock signal has a frequency slightly less than two times the baud rate of the received input signal. Since the quality of the ADC 110 is dependent on a good clock signal, the prior art receiver designs typically use an expensive and high precision oscillator. These oscillators are not very tunable across a frequency range. In order to provide flexibility in baud rate, e.g. for 7% or 20% Forward Error Correction (FEC) overhead, either a second oscillator must be provided or digital resampling must be performed. Digital resampling has the flexibility that the ADC clock may be free running with a fixed frequency. Note also that the digital logic before the resampler also runs on this clock or a divided down version of this clock. For example, for 128 samples in parallel, the frequency of the FRO clock signal is $f_x/128$.

The third clock signal is the received baud rate $f_k$ clock. After the digital resampler, the data is now sampled at 2 samples/baud that is equal to frequency $f_k$. The resampling is performed digitally based on a number that is incremented by an amount dependent upon the resampling rate $\gamma$. As explained above, the control loop through the phase detector 170 and NCO 150 (FIG. 1) works to remove the low frequency jitter. The digital delay element 190 removes the fast frequency jitter. In tracking mode, the NCO 150 is derived from the phase detector 170 operating on the received signal itself.

The fourth clock signal is the external VCO 210. The digital logic after the resampler operates on a clock that has an average frequency $f_k$ or a divided down version (e.g., for 192 samples in parallel it will have a frequency $f_k/192$) provided by the external VCO 210. The external VCO 210 regulates how quickly the samples are taken out from the buffer 310 (FIGs. 3 and 4) and resampled. The external VCO 210 clock signal regulates the input and output pointers and avoids collision between them.

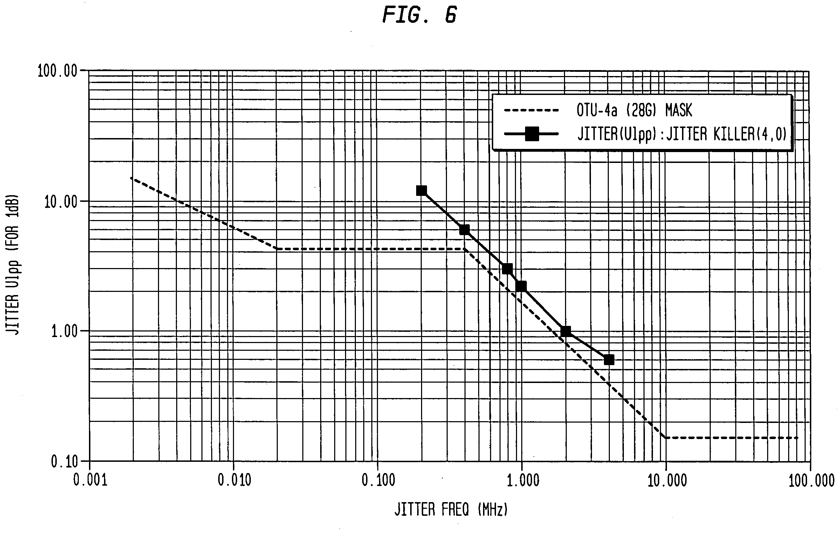

Reference is now made to FIG. 6 that shows simulation results of jitter output for a receiver using the digital techniques described herein for clock recovery. The graph shows bit-accurate simulations from a receiver chip using asynchronous sampling and digital resampling. The results show that jitter is within the tolerated limits as defined by the OTU-4a standard.

The clock recovery techniques described herein have lower power dissipation due to the digital resampling and undersampling. A receiver designed according to these techniques has greater high flexibility in baud-rates while achieving low noise due to the use of a precision free running oscillator for the ADC, and yet fulfills the OTU-4a jitter requirements. These techniques are applicable to optical or electrical (e.g., wireless) devices.

The above description is intended by way of example only.

## Claims

1. A method of clock recovery in a receiver (10) in a communication system, the method comprising:

generating (500) a free running clock with a free running oscillator (120) for clocking an analog to digital converter (110);
converting (510) an input analog signal derived from a received signal with the analog to digital converter (110) to produce digital data;
digitally resampling (520) the digital data using a numerically controlled oscillator clock signal;
performing phase detection (530) on the digital data after it is digitally resampled (520) to determine any phase offset;
adjusting (540) the numerically controlled oscillator clock signal based on the phase offset;
feeding forward (560) the phase offset to a digital delay element (190); and delaying (550) the digital data with the digital delay element (190) after the digitally resampling operation; the method further comprising;
if the analog to digital convertor (110) is undersampling;
performing chromatic dispersion filtering on the digital data before resampling of the digital data.

2. The method of claim 1, wherein generating (500) comprises generating the free running clock so that the sampling in the ADC is performed a rate higher than 2 samples/bit or
wherein generating (500) comprises generating the free running clock so that the sampling in the ADC is performed at a rate lower than 2 samples/bit.

3. The method of any one of the preceding claims, wherein digitally resampling (520) comprises selecting digital sample data from the digital data based on a resampling ratio for interpolation and interpolating the selected digital sample data.

4. The method of any one of the preceding claims, wherein adjusting (540) comprises numerically adjusting a counter in a numerically controlled oscillator (150) based on output of the phase detection.

5. The method of claim 4, and further comprising digitally filtering output of the phase detection to generate a resampling ratio, and wherein adjusting the counter in the numerically controlled oscillator is based on the resampling ratio and/or
when the receiver (10) is operating in an acquisition mode, further comprising using a reference clock to drive the numerically controlled oscillator (150) that generates the numerically controlled oscillator clock to determine a resampling rate used for digitally resampling the digital data.

6. The method of any one of the preceding claims, further comprising decoding digital data derived from output of the digital delay element (190).

7. The method of any one of the preceding claims, wherein adjusting comprises adjusting the numerically controlled oscillator clock so as to remove relatively low frequency jitter in the digital data and feeding forward comprises feeding forward the phase offset to the digital delay element (190) to remove relatively high frequency jitter in the digital data.

8. An apparatus for recovering a clock in a receiver (10) used in an communication system, the apparatus comprising:

a free running oscillator (120) configured to generate a free running clock;
an analog to digital converter (110) configured to receive an input analog signal obtained from a received signal and to convert the input analog signal to digital data based on the free running clock;
a digital resampler (140) configured to resample the digital data;
a numerically controlled oscillator (150) configured to output a numerically controlled oscillator clock that is supplied to the digital resampler (140);
a phase detector (170) configured to detect any phase offset in the digital data after it is digitally resampled, the output of the phase detector (170) being coupled to a control input of the numerically controlled oscillator (150); and
a digital delay element (190) configured to delay the digital data after it is digitally resampled, the digital delay element (190) being controlled by the output of the phase detector (170); the apparatus further comprising:

a chromatic dispersion filter (130) configured to perform chromatic dispersion filtering on the digital data before resampling of the digital data, if the analog to digital convertor is undersampling,.

9. The apparatus of claim 8, wherein the free running oscillator (120) is configured to generate the free running clock so that the sampling in the ADC (110) is performed at a rate higher than 2 samples/bit; or
wherein the free running oscillator (120) is configured to generate the free running clock so that the sampling in the ADC (110) is performed at a rate lower than 2 samples/bit.

10. The apparatus of any one of claims 8 to 9, wherein the numerically controlled oscillator (150) comprises a counter that is adjusted based on the output of the phase detector (170) and
wherein the apparatus can further comprise a digital filter configured to filter the output of the phase detector (170) to generate a resampling ratio, and wherein the counter in the numerically controlled oscillator (150) is adjusted based on the resampling ratio.

11. The apparatus of any one of claims 8 to 10, wherein the digital resampler (140) includes a digital interpolator (320), and is configured to select digital data based on a resampling ratio for interpolation by the digital interpolator (320).

12. A signal processing receiver system comprising the apparatus for recovering a clock according to claim 8.

13. The system of claim 12, wherein the digital resampler (140) is configured to sample the digital data at a higher rate than a rate of the free running clock, wherein the digital delay element (190) can be configured to receive as input an output of the phase detector (170) in order to delay the digital data after resampling to remove any relatively high frequency jitter, and wherein the numerically controlled oscillator (150) can be configured adjust the numerically controlled oscillator clock based on output from the phase detector (170) to remove any relatively low frequency jitter.

**Patentansprüche**

1. Verfahren zur Taktrückgewinnung in einem Empfänger (10) in einem Kommunikationssystem, wobei das Verfahren beinhaltet:

Erzeugen (500) eines freilaufenden Takts mit einem freischwingenden Oszillator (120) zum Takten eines Analog-Digital-Wandlers (110);
Umwandeln (510) eines analogen Eingangssignals, das von einem empfangenen Signal abgeleitet ist, mit dem Analog-Digital-Wandler (110), um digitale Daten zu erzeugen;
Durchführen von digitalem Resampling (520) der digitalen Daten unter Verwendung eines numerisch gesteuerten Oszillator-Taktsignals;
Durchführen von Phasendetektion (530) für die digitalen Daten nach deren digitalem Resampling (520), um einen etwaigen Phasenversatz zu bestimmen;
Einstellen (540) des numerisch gesteuerten Oszillator-Taktsignals basierend auf dem Phasenversatz;
Vorschieben (560) des Phasenversatzes an ein digitales Verzögerungselement (190); und
Verzögern (550) der digitalen Daten mit dem digitalen Verzögerungselement (190) nach der digitalen Resampling-Operation;
wobei das Verfahren des Weiteren beinhaltet:

wenn der Analog-Digital-Wandler (110) Unterabtastung durchführt:

Durchführen chromatischer Dispersionsfilterung für die digitalen Daten vor dem Resampling der digitalen Daten.

2. Verfahren nach Anspruch 1, wobei das Erzeugen (500) das Erzeugen des freilaufenden Takts derart beinhaltet, dass die Abtastung in dem Analog-Digital-Wandler mit einer Rate durchgeführt wird, die höher als 2 Abtastungen/Bit ist, oder wobei das Erzeugen (500) das Erzeugen des freilaufenden Takts derart beinhaltet, dass die Abtastung in dem Analog-Digital-Wandler mit einer Rate durchgeführt wird, die niedriger als 2 Abtastungen/Bit ist.

3. Verfahren nach einem der vorhergehenden Ansprüche, wobei das digitale Resampling (520) das Auswählen digitaler Abtastdaten aus den digitalen Daten basierend auf einem Resampling-Verhältnis für Interpolation und das Interpolieren der ausgewählten digitalen Abtastdaten beinhaltet.

4. Verfahren nach einem der vorhergehenden Ansprüche, wobei das Einstellen (540) das numerische Einstellen eines Zählers in einem numerisch gesteuerten Oszillator (150) basierend auf dem Ausgang der Phasendetektion beinhaltet.

5. Verfahren nach Anspruch 4, das des Weiteren das digitale Filtern des Ausgangs der Phasendetektion beinhaltet, um ein Resampling-Verhältnis zu erzeugen, und wobei das Einstellen des Zählers in dem numerisch gesteuerten Oszillator auf dem Resampling-Verhältnis basiert und/oder

wenn der Empfänger (10) in einem Empfangsmodus arbeitet, des Weiteren das Verwenden eines Referenztakts beinhaltet, um den numerisch gesteuerten Oszillator (150) zu treiben, der den numerisch gesteuerten Oszillatortakt erzeugt, um eine Resamplingrate zu bestimmen, die zum digitalen Resampling der digitalen Daten verwendet wird.

6. Verfahren nach einem der vorhergehenden Ansprüche, das des Weiteren das Decodieren digitaler Daten beinhaltet, die vom Ausgang des digitalen Verzögerungselements (190) abgeleitet sind.

7. Verfahren nach einem der vorhergehenden Ansprüche, wobei das Einstellen das Einstellen des numerisch gesteuerten Oszillatortakts beinhaltet, um relativ niedrige Frequenzschwankungen in den digitalen Daten zu entfernen, und das Vorschieben das Vorschieben des Phasenversatzes an das digitale Verzögerungselement (190) beinhaltet, um relativ hohe Frequenzschwankungen in den digitalen Daten zu entfernen.

8. Vorrichtung zum Rückgewinnen eines Takts in einem Empfänger (10), der in einem Kommunikationssystem verwendet wird, wobei die Vorrichtung aufweist:

einen freischwingenden Oszillator (120), der dazu konfiguriert ist, einen freilaufenden Takt zu erzeugen;

einen Analog-Digital-Wandler (110), der dazu konfiguriert ist, ein analoges Eingangssignal zu empfangen, das von einem empfangenen Signal erhalten wird, und das analoge Eingangssignal basierend auf dem freilaufenden Takt in digitale Daten umzuwandeln;

einen digitalen Resampler (140), der dazu konfiguriert ist, Resamling für die digitalen Daten durchzuführen;

einen numerisch gesteuerten Oszillator (150), der dazu konfiguriert ist, einen numerisch gesteuerten Oszillatortakt auszugeben, der dem digitalen Resampler (140) zugeführt wird;

einen Phasendetektor (170), der dazu konfiguriert ist, einen etwaigen Phasenversatz in den digitalen Daten nach deren digitalem Resampling zu ermitteln, wobei der Ausgang des Phasendetektors (170) an einen Steuereingang des numerisch gesteuerten Oszillators (150) gekoppelt ist; und

ein digitales Verzögerungselement (190), das dazu konfiguriert ist, die digitalen Daten nach deren digitalem Resampling zu verzögern, wobei das digitale Verzögerungselement (190) vom Ausgang des Phasendetektors (170) gesteuert wird;

wobei die Vorrichtung des Weiteren aufweist:

ein chromatisches Dispersionsfilter (130), das dazu konfiguriert ist, chromatische Dispersionsfilterung für die digitalen Daten vor dem Resampling der digitalen Daten durchzuführen, wenn der Analog-Digital-Wandler Unterabtastung durchführt.

9. Vorrichtung nach Anspruch 8, wobei der freischwingende Oszillator (120) dazu konfiguriert ist, den freilaufenden Takt derart zu erzeugen, dass das Abtasten in dem Analog-Digital-Wandler (110) mit einer Rate durchgeführt wird, die höher als 2 Abtastungen/Bit ist; oder

wobei der freischwingende Oszillator (120) dazu konfiguriert ist, den freilaufenden Takt derart zu erzeugen, dass das Abtasten in dem Analog-Digital-Wandler (110) mit einer Rate durchgeführt wird, die niedriger als 2 Abtastungen/Bit ist.

10. Vorrichtung nach einem der Ansprüche 8 bis 9, wobei der numerisch gesteuerte Oszillator (150) einen Zähler aufweist, der basierend auf dem Ausgang des Phasendetektors (170) eingestellt wird, und

wobei die Vorrichtung des Weiteren ein digitales Filter aufweisen kann, das dazu konfiguriert ist, den Ausgang des Phasendetektors (170) zu filtern, um ein Resampling-Verhältnis zu erzeugen, und wobei der Zähler in dem numerisch gesteuerten Oszillator (150) basierend auf dem Resampling-Verhältnis eingestellt wird.

11. Vorrichtung nach einem der Ansprüche 8 bis 10, wobei der digitale Resampler (140) einen digitalen Interpolator (320) aufweist, und dazu konfiguriert ist, digitale Daten basierend auf einem Resampling-Verhältnis zur Interpolation durch den digitalen Interpolator (320) auszuwählen.

12. Signalverarbeitungs-Empfängersystem, das die Vorrichtung zum Rückgewinnen eines Takts nach Anspruch 8 aufweist.

13. System nach Anspruch 12, wobei der digitale Resampler (140) dazu konfiguriert ist, die digitalen Daten mit einer höheren Rate als der Rate des freilaufenden Takts abzutasten,

wobei das digitale Verzögerungselement (190) dazu konfiguriert werden kann, einen Ausgang des Phasendetektors (170) als Eingang zu empfangen, um die digitalen Daten nach dem Resampling zu verzögern, um etwaige relativ hohe Frequenzschwankungen zu entfernen, und wobei der numerisch gesteuerte Oszillator (150) dazu konfiguriert werden kann, den numerisch gesteuerten Oszillatortakt basierend auf dem Ausgang von dem Phasendetektor (170) einzustellen, um etwaige relativ niedrige Frequenzschwankungen zu entfernen.

**Revendications**

1. Procédé de rétablissement d'horloge dans un récepteur (10) dans un système de communication, le procédé comprenant de :

générer (500) une horloge non asservie avec un oscillateur non asservi (120) pour chronométrer un convertisseur analogique à numérique (ADC) (110) ;
convertir (510) un signal analogique d'entrée dérivé d'un signal reçu avec le convertisseur analogique à numérique (110) pour produire des données numériques ;
rééchantillonner numériquement (520) les données numériques en utilisant un signal d'horloge contrôlé numériquement par oscillateur ;
effectuer une détection de phase (530) sur les données numériques après qu'elles aient été rééchantillonnées numériquement (520) pour déterminer tout décalage de phase ;
ajuster (540) le signal d'horloge contrôlé numériquement par oscillateur en fonction du décalage de phase ;

transmettre (560) le décalage de phase à un élément de délai numérique (190) ; et retarder (550) les données numériques avec l'élément de délai numérique (190) après l'opération de rééchantillonnage numérique ; le procédé comprenant en outre que :

si le convertisseur analogique à numérique (110) est en sous-échantillonnage, effectuer un filtrage de dispersion chromatique sur les données numériques avant le rééchantillonnage des données numériques.

2. Procédé selon la revendication 1, dans lequel la génération (500) comprend de générer l'horloge non asservie de façon que l'échantillonnage dans l'ADC est effectué à un taux supérieur à 2 échantillons/bit ou
dans lequel la génération (500) comprend de générer une horloge non asservie de façon que l'échantillonnage dans l'ADC est effectué à un taux inférieur à 2 échantillons/bit.

3. Procédé selon l'une quelconque des revendications précédentes, dans lequel le rééchantillonnage numérique (520) comprend de sélectionner des données d'échantillon numérique parmi les données numériques en fonction d'un rapport de rééchantillonnage pour interpolation, et d'interpoler les données d'échantillonnage numérique choisies.

4. Procédé selon l'une quelconque des revendications précédentes, dans lequel l'ajustement (540) comprend d'ajuster numériquement un compteur dans un oscillateur numériquement contrôlé (150) en fonction d'une sortie de la détection de phase.

5. Procédé selon la revendication 4, comprenant en outre de filtrer numériquement la sortie de la détection de phase pour générer un rapport de rééchantillonnage, et dans lequel ajuster le compteur dans l'oscillateur numériquement contrôlé est basé sur le rapport de rééchantillonnage, et/ou quand le récepteur (10) fonctionne dans un mode d'acquisition, comprenant en outre d'utiliser une horloge de référence pour commander l'oscillateur numériquement contrôlé (150) qui génère l'horloge à oscillateur numériquement contrôlé pour déterminer un taux de rééchantillonnage utilisé pour rééchantillonner numériquement les données numériques.

6. Procédé selon l'une quelconque des revendications précédentes, comprenant en outre de décoder des données numériques dérivées de la sortie de l'élément de délai numérique (190).

7. Procédé selon l'une quelconque des revendications précédentes, dans lequel l'ajustement comprend d'ajuster l'horloge à oscillateur numériquement contrôlé de façon à éliminer des oscillations de relativement basse fréquence dans les données numériques et de la transmission comprend de transmettre le décalage de phase à l'élément de délai numérique (190) pour éliminer des oscillations de relativement haute fréquence dans les données numériques.

8. Appareil destiné à rétablir une horloge dans un récepteur (10) utilisé dans un système de communication, l'appareil comprenant :

un oscillateur non asservi (120) conçu pour générer une horloge non asservie ;
un analogue à un convertisseur numérique (110) conçu pour recevoir un signal analogique d'entrée obtenu depuis un signal reçu et pour convertir le signal analogique d'entrée en données numériques sur la base de l'horloge non asservie ;
un rééchantillonneur numérique (140) conçu pour rééchantillonner les données numériques ;
un oscillateur numériquement contrôlé (150) conçu pour produire une horloge à oscillateur numériquement contrôlé qui est fournie au rééchantillonneur numérique (140) ;
détecteur de phase (170) conçu pour détecter tout décalage de phase dans les données numériques après rééchantillonnage numérique, la sortie du détecteur de phase (170) étant couplée à une entrée de contrôle de l'oscillateur numériquement contrôlé (150) ; et
un élément de délai numérique (190) conçu pour retarder les données numériques après leur rééchantillonnage, l'élément de délai numérique (190) étant contrôlé par la sortie du détecteur de phase (170) ; l'appareil comprenant en outre :

un filtre de dispersion chromatique conçu pour effectuer un filtrage de dispersion chromatique sur les données numériques avant rééchantillonnage des données numériques si le convertisseur analogique à numérique est en sous-échantillonnage.

9. Appareil selon la revendication 8, dans lequel l'oscillateur non asservi (120) est conçu pour générer l'horloge non asservie de façon que l'échantillonnage dans l'ADC (110) soit effectué à un taux supérieur à 2 échantillons/bit ; ou l'oscillateur non asservi (120) est conçu pour générer l'horloge non asservie de façon que l'échantillonnage dans l'ADC (110) soit effectué à un taux inférieur à 2 échantillons/bit.

10. Appareil selon la revendication 8 ou 9, dans lequel l'oscillateur numériquement contrôlé (150) comprend un compteur qui est ajusté en fonction de la sortie du détecteur de phase (170) et

dans lequel l'appareil peut en outre comprendre un filtre numérique conçu pour filtrer la sortie du détecteur de phase (170) pour générer un rapport de rééchantillonnage, et dans lequel le compteur dans l'oscillateur numériquement contrôlé (150) est ajusté en fonction du rapport de rééchantillonnage.

11. Appareil selon l'une quelconque des revendications 8 à 10, dans lequel le rééchantillonneur numérique (140) inclut un interpolateur numérique (320) et est conçu pour sélectionner des données numériques en fonction d'un rapport de rééchantillonnage pour interpolation par l'interpolateur numérique (320).

12. Système de réception et de traitement de signal comprenant l'appareil de rétablissement d'horloge selon la revendication 8.

13. Système selon la revendication 12, dans lequel le rééchantillonneur numérique (140) est conçu pour échantillonner les données numériques à un taux supérieur à une vitesse de l'horloge non asservie, dans lequel l'élément de délai numérique (190) peut être configuré pour recevoir comme entrée une sortie du détecteur de phase (170) afin de retarder les données numériques après rééchantillonnage pour éliminer toute oscillation de relativement haute fréquence, et dans lequel l'oscillateur numériquement contrôlé (150) peut être configuré pour ajuster l'horloge à oscillateur numériquement contrôlé en fonction d'une sortie du détecteur de phase (170) pour éliminer toute oscillation de relativement basse fréquence.

FIG. 1

EP 2 615 769 B1

## FIG. 2

INPUT SIGNAL

210 — VCO

RESAMPLER

ADC (CLOCK DOMAIN $f_x$)

110

140

EQUALIZER

160

PHASE DETECTOR

170

174

172

190 — DELAY ELEMENT

CLOCK RECOVERY

220

232

234

Re

Im

DECODER

DIGITAL OUTPUT PROCESSING

230

CLOCK DOMAIN $f_k$

EP 2 615 769 B1

12

FIG. 3

FIG. 4

## FIG. 5

GENERATE A FREE RUNNING CLOCK FOR
CLOCKING AN ANALOG-TO-DIGITAL CONVERTER — 500

CONVERT THE INPUT ANALOG SIGNAL DERIVED FROM
A RECEIVED SIGNAL WITH THE ANALOG-TO-DIGITAL
CONVERTER TO PRODUCE DIGITAL DATA — 510

DIGITALLY RESAMPLE THE DIGITAL DATA
USING A NUMERICALLY CONTROLLED OSCILLATOR CLOCK — 520

PERFORM PHASE DETECTION ON THE DIGITAL
DATA TO DETERMINE ANY PHASE OFFSET — 530

ADJUST THE NUMERICALLY CONTROLLED OSCILLATOR
CLOCK BASED ON THE PHASE OFFSET — 540

DELAY THE DIGITAL DATA AFTER
THE DIGITAL RESAMPLING OPERATION
USING A DIGITAL DELAY ELEMENT — 550

FEED FORWARD THE PHASE OFFSET
TO THE DIGITAL DELAY ELEMENT — 560

## FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080056403 A1
- EP 0924892 A2